# EUROPEAN PATENT APPLICATION

(11) **EP 1 632 809 A1**
(43) Date of publication of application: **08.03.2006**
(21) Application number: 05291812.5
(22) Date of filing: 31.08.2005
(51) Int. Cl.: G03B 21/62, G03B 21/60, G02B 3/00

(54) **Projection display screen having microlens array**

(30) Priority: 03.09.2004 KR 2004070478
(71) Applicant: LG ELECTRONICS INC., Seoul 150-721 (KR); LG Micron Ltd., Gyeongsangbuk-do, 730-400 (KR)
(72) Inventor: Yee, Young-Joo, Seongnam-si 463-070 Gyeonggi-Do (KR); Kwon, Hyouk, Gwanak-gu 151-782 Seoul (KR); Chung, Ji-Hyouk, Yeongdeungpo-gu 150-096 Seoul (KR); Oh, Chang-Hoon, Gwanak-gu 151-855 Seoul (KR); Lim, Tae-Sun, Suwon-si Gyeonggi-do 441-704 (KR); Park, Ki-Won, Anyang-si 431-050 Gyeonggi-Do (KR); Seong, Dong-Mug, Ansan-si 425-881 Gyeonggi-Do (KR); Lee, Gun-Woo, Dalseo-Gu 704-814 Daegu (KR)
(74) Representative: Loisel, Bertrand

(57) **Abstract**

Disclosed herein is a projection screen having a microlens array. The projection screen includes a substrate, a light blocking layer, a light diffusion layer, and a protection layer. The substrate is formed to mount a plurality of microlenses thereon. A microlens array is formed of the microlenses that are arranged and formed on the entire surface of the substrate. The light blocking layer is formed on the rear of the surface on which the microlens array of the substrate is formed. The light diffusion layer is formed on the bottom of the light blocking layer. The protection layer is formed on the bottom of the light diffusion layer.

## Description

### BACKGROUND OF THE INVENTION

### 1. Field of the Invention

The present invention relates generally to a projection display screen having a microlens array and, more particularly, to a projection display screen that can adjust viewing angles using both a microlens array sheet and a light diffusion layer, wherein the light diffusion layer has different radiation characteristics, that is, an arbitrary angle distribution, depending on the direction of incident parallel light.

### 2. Description of the Related Art

In order to meet the demand for large-screen and high-quality flat panel displays, various displays, such as high-quality and large-sized displays, have been developed. Recently, as customers' demand for large screen displays increases, projection television system technology capable of enlarging an image displayed on a small screen and allowing the enlarged image to be viewed is being developed. The term "projection system technology" refers to technology that enlarges and projects a small image displayed on a micro display, such as a Cathode Ray Tube (CRT) display, a Liquid Crystal Display (LCD), a Digital Light Processor (LDP) display, or a Liquid Crystal on Silicon (LCoS) display, and forms the enlarged, projected image on a projection screen, thus allowing a user to view the enlarged, projected image on a large screen.

A projection display system is a system that enlarges an image, which is projected from a light source, projects the enlarged image onto a screen, and provides a final image to a viewer. The performance of a rear projection display screen is determined by characteristics such as gain, viewing angles, contrast, and resolution. When many users watch a projection television together at the same time, a screen characteristic of having wide viewing angles in a vertical direction as well as in a lateral direction is demanded. The adjustment of viewing angles is required to meet the customers' demand, for example, the demand for wide viewing angles in lateral and vertical directions, as in a screen product using a cylinder type lenticular lens, that is, a conventional product.

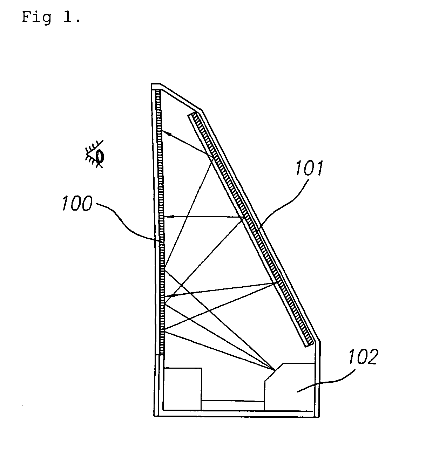

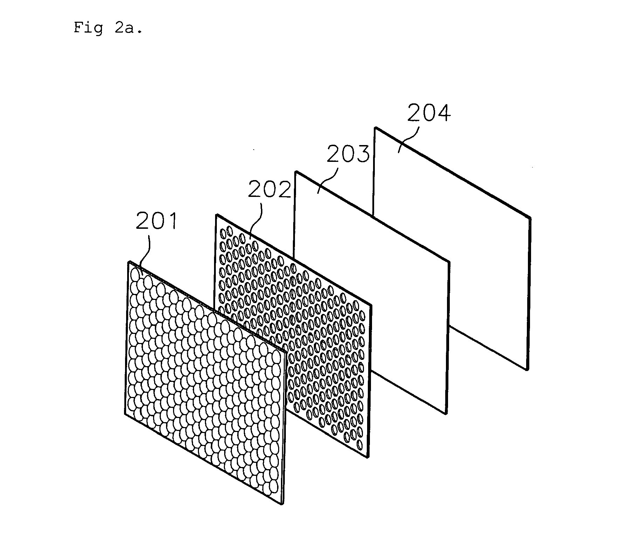

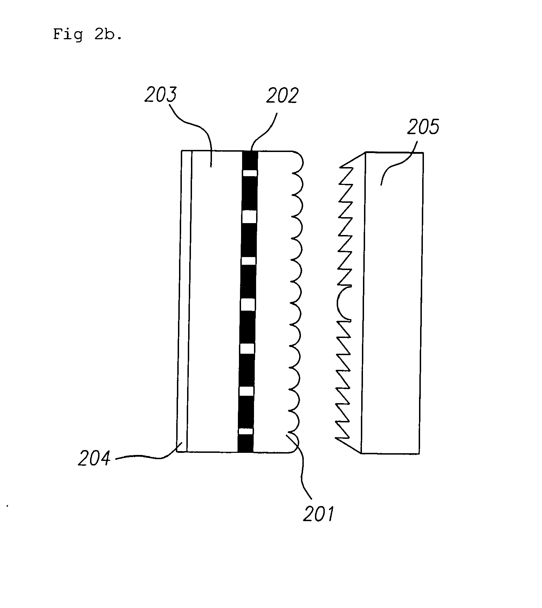

FIGS. 1 and 2A to 2C are views showing the schematic construction of a conventional rear projection type television, and the schematic construction and section of a screen 100, respectively.

Referring to FIG. 1, the rear projection type television includes a light source lamp and optical device unit 102, a mirror 101, and projection lenses.

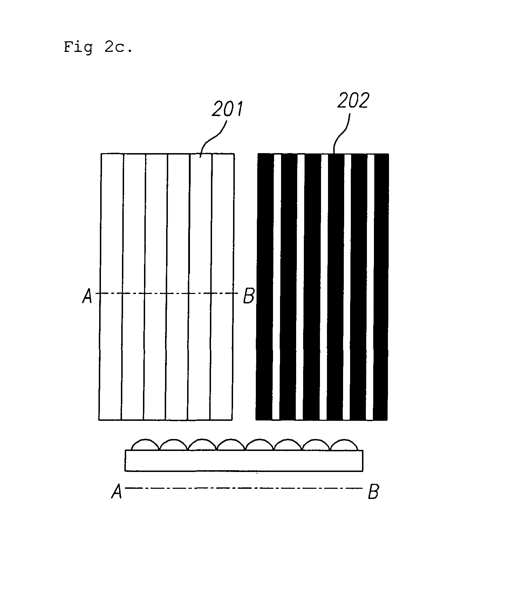

Referring to FIGS. 2A to 2C, the screen 100 includes a Fresnel lens 205, a microlens array sheet 201, a light blocking layer 202, a light diffusion layer 203, and a hard coating part 204 including a protection layer. FIG. 2C shows a front view, a rear view, and a sectional view taken along line A-B, which schematically illustrates the structure of a lenticular one of conventional projection screens.

As shown in FIGS. 2A to 2C, the projection screen includes a microlens array 201 having a lenticular structure, and a Fresnel lens 205. Lenses used for the conventional rear projection screen employ a lenticular array to enlarge a viewing angle in a lateral direction. In this case, each of the lenticular lenses has a semi-cylindrical shape extending in a vertical direction and has a curved surface formed only in the lateral direction, so that it has a characteristic in which incident light is refracted only in left and right directions. Accordingly, the achievement of a viewing angle in the vertical direction depends only on the light diffusion layer 203, so that consumers cannot see an image at viewing angles other than some restricted vertical viewing angles, and the vertical viewing angle is limited to about 10 degrees.

Accordingly, a screen that allows wider viewing angles to be realized in the vertical direction as well as in the lateral direction and realizes a wider viewing angle distribution than does the conventional screen having a lenticular structure that realize a wide viewing angle only in the lateral direction, is required.

### SUMMARY OF THE INVENTION

Accordingly, the present invention has been made keeping in mind the above problems occurring in the prior art, and an object of the present invention is to provide an optical sheet, such as a rear projection screen, which achieves the sufficient lateral and vertical viewing angles of the projection screen on which an image is formed through a microlens array, is capable of attaining high resolution images having a high brightness through fine-pitched lenses, and employs a light diffusion layer sheet having multiple radiation angles in lateral and vertical directions, thus maintaining a wide lateral viewing angle, and enabling the vertical viewing angle to be easily adjusted.

In order to accomplish the above object, the present invention provides a projection screen having a microlens array, including a substrate formed to mount a plurality of microlenses thereon; a microlens array formed of microlenses that are arranged and formed on the entire surface of the substrate; a light blocking layer formed on the rear of the surface on which the microlens array of the substrate is formed; a light diffusion layer formed on the bottom of the light blocking layer; and a protection layer formed on the bottom of the light diffusion layer.

In the present invention, it is preferred that the microlenses, which constitute the microlens array, be planar convex lenses.

In the present invention, it is preferred that the microlenses, which constitute the microlens array, have different lateral and vertical curvatures.

In the present invention, it is preferred that the microlenses have spherical or non-spherical surfaces.

In the present invention, it is preferred that the microlenses be arranged in a honeycomb, rectangular, triangular, or diamond arrangement.

In the present invention, it is preferred that the pitch between neighboring microlenses in the microlens array be less than 150 µm.

In the present invention, it is preferred that the light diffusion layer include irregularities in a holographic form, on at least one surface thereof.

In the present invention, it is preferred that the light diffusion layer include a lenticular lens array formed on at least one surface thereof, and the lenticular lens array be regularly or irregularly arranged.

In the present invention, it is preferred that the light diffusion layer include irregularities whose protrusions and recesses are alternately formed on at least one surface thereof, and the irregularities be regularly or irregularly arranged.

In the present invention, it is preferred that the light diffusion layer include light diffusible beads therein, and the light diffusible beads be aligned in a predetermined direction or randomly.

It is preferred that the microlenses be planar convex lenses. It is effective that the respective microlenses have a shape whose lateral and vertical curvatures are different from each other, so that light emission angles are differently adjusted according to direction. It is effective that the microlenses are arranged in a honeycomb, hexagonal including an oblong hexagonal, diamond, rectangular, or triangular arrangement. Furthermore, the gap between the microlenses arranged on the substrate is almost zero, that is, a filled portion is close to 100%, so that optical efficiency can be maximized.

Meanwhile, the arrangement of the microlenses formed on the substrate may be formed such that the edges of the microlenses overlap each other. In this case, it is preferred that the respective cutting surfaces of the boundaries of the microlenses, which are constructed such that the edges of the microlenses overlap each other, be formed to have an arbitrary curvature. The respective microlenses may be formed in spherical or non-spherical shapes.

Furthermore, in the range of light emission angles of the microlens, it is preferred that, with respect to the line normal to a lens surface, a lateral light emission angle be greater than 30 degrees along a transverse axis, and an vertical light emission angle be greater than 10 degrees along a longitudinal axis. The term "light emission angle" refers to an angle at which half of a front gain value can be acquired on the basis of the front gain value.

As described above, the light emission angle can be adjusted using the light diffusion layer, having directivity, as well as the microlens array. Furthermore, it is effective that the substrate is made of a polymer material so as to function as a support when the microlenses are formed. Alternatively, PolyEthylene Terephthalate (PET) may be used as the materal. A resin material for forming the microlens array and a sheet material for functioning as a support have a high transmissivity, and the materials have a refractive index of above 1.5.

Furthermore, it is preferred that the light apertures, which are aligned so as to correspond to the respective microlenses, be formed at the back of the microlens array surface. It is effective that the light blocking layer is formed on surface regions other than the light apertures. The light blocking layer occupies an area of above 50% of the entire area so that luminance contrast is maintained at a certain level. A plane that abuts on the light blocking layer is the light diffusion layer that is capable of controlling the direction of light, and the lateral and vertical viewing angles can be adjusted and enlarged by attaching the light diffusion layer to the microlens array sheet.

The light diffusion layer may be a light diffusion layer manufactured using a holographic principle, a light diffusion layer on the surface of which cylinder type convex lenticular lenses are arranged in the vertical direction, a light diffusion layer on the surface of which concave lenses are arranged, a uneven light diffusion layer on the surface of which protrusions and recesses are formed, or a light diffusion layer on which light diffusible beads are arranged in a predetermined direction or randomly. In the case of the surface light diffusion layer, a lens array is attached in the direction of the microlens array sheet or in the opposite direction to appropriately control viewing angles. The holographic light diffusion layer, which is manufactured to have a diffusion effect using the holographic principle, can be designed such that light is dispersed in a desired direction through a diffraction effect. In the case of a volume light diffusion layer formed of beads, diffusion angles and the extent of haze vary with the arrangement, amount, and density of the beads, and a light diffusion layer having an appropriate performance is adopted and attached to the microlens array sheet. The light diffusion layer may be constructed using two or more of the above-described light diffusion layers.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a view showing the internal construction of a conventional projection television;
FIGS. 2A to 2C are views showing the construction of the typical projection screen of the projection television;
FIG. 3 is a plan view of a microlens array sheet according to an embodiment of the present invention, a bottom view of a light blocking layer according to the embodiment of the present invention and a sectional view of the microlens array sheet;
FIG. 4 is a view illustrating various types of microlens arrangements according to an embodiment of the present invention;
FIGS. 5A to 5C are sectional views of microlens array screens including various light diffusion layers according to embodiments of the present invention; and
FIGS. 6A and 6B are graphs showing variation in viewing angle when light diffusion layers having directivity according to an embodiment of the present invention are applied.

### DESCRIPTION OF THE PREFERRED EMBODIMENTS

Preferred embodiments of the present invention are described in detail with reference to the accompanying drawings below. The same reference numerals are used throughout the different drawings to designate the same or similar components. When it is determined that detailed descriptions of well-known functions or constructions may be unnecessary and make the gist of the present invention unclear, the detailed descriptions are omitted below.

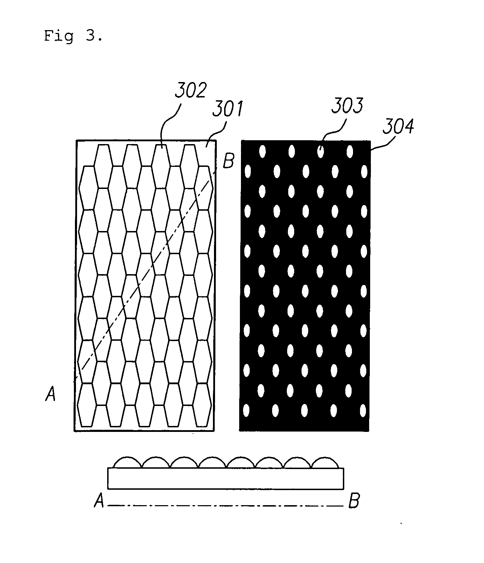

FIG. 3 is a view showing the microlens array sheet and light blocking layer of a projection screen according to an embodiment of the present invention.

In more detail, FIG. 3 shows a plan view of a substrate 301 of the projection screen, on which a honeycomb-shaped microlens array is formed, a rear view which shows the light blocking layer 304, and a sectional view which is taken along line A-B.

In a conventional projection screen, the cylinder type curved surfaces of the lenticular lens array is formed only in a lateral direction and, therefore, incident light is reflected only in the lateral direction, so that it is difficult to realize a vertical viewing angle above a certain level. In contrast, the microlens array 302 of the projection screen according to the present invention is formed to have a honeycomb arrangement, and the microlenses 302' have respective surfaces curved in lateral and vertical directions, so that considerably wide viewing angles can be achieved. The projection screen according to the present invention includes the substrate 301 configured to mount the microlenses 302' thereon and support the microlenses 302' and the microlenses 302' arranged on the substrate 301 in a honeycomb arrangement.

The microlenses 302' are planar-convex lenses in which oval, hexagon or rectangular unit microlenses are arranged in a two-dimensional arrangement, or may be spherical or non-spherical unit microlenses. Meanwhile, the substrate 301 is made of a transparent polymer material so as to function as a support necessary at the time of forming the microlenses 302'. The size of the respective unit microlenses is determined such that the unit microlenses are arranged at a pitch below about 150 µm. The size of the pitch is designed in consideration of the prevention of moire.

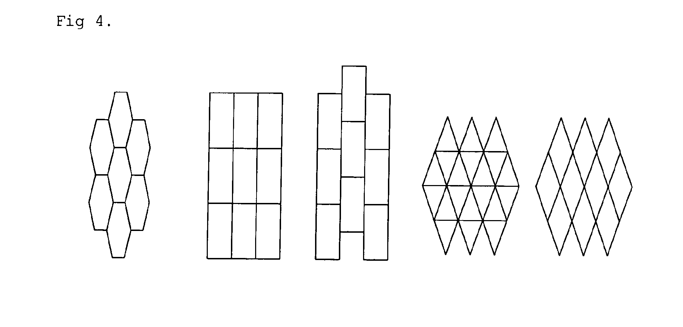

Meanwhile, light apertures 303, which are arranged to correspond to individual lenses, are formed on the rear of the transparent substrate 301 on which the microlenses 302' are arranged, and the rear regions other than the regions of the light apertures 303 function as the black color light blocking layer 304. In the structure of honeycomb-shaped microlens array 302', the design of appropriately shaped lenses is necessary to maintain constant brightness while keeping total optical output uniform and achieving a sufficient vertical viewing angle. That is, it is preferred that each of the lenses, as shown in FIG. 4, be formed in a honeycomb shape that is similar to a hexagon lengthened in a longitudinal direction, in a rectangular shape, or in a triangular shape. The microlenses 302' formed on the substrate 301 are arranged such that the edges thereof overlap each other and, therefore, the ratio of an area, which is occupied by the microlenses 302', to the total area of the substrate can be improved. The microlenses 302' are characterized in that transverse and longitudinal curvatures are differently formed to adjust a light emission angle. The curvatures of the microlenses include the transverse and longitudinal length of each microlens and are determined by the height of each microlens and the non-spherical constant value of each microlens. The range of the light emission angle of each microlens is formed such that, with respect to the normal line of the a lens plane, the lateral light emission angle is greater than 30 degrees along a transverse axis and the vertical light emission angle is greater than 10 degrees along a longitudinal direction. As described above, the variously shaped microlenses are applied to a projection screen, so that the effects of achieving a viewing angle in the lateral direction, which is similar to the example of the application of honeycomb-shaped microlens array 302, and an excellent viewing angle in the vertical direction.

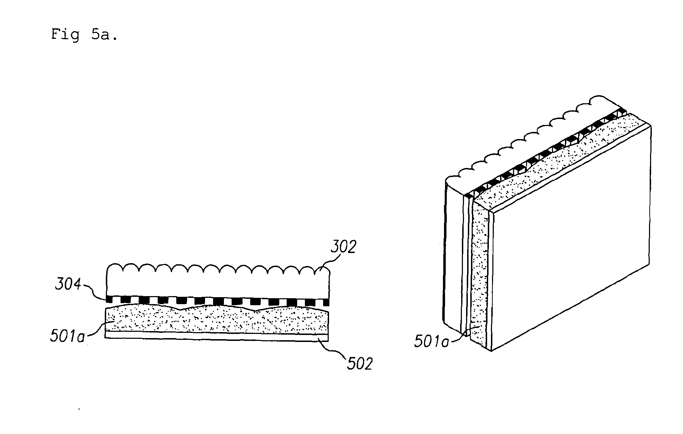

FIGS. 5A to 5C show examples of screens on which some light diffusion layers are mounted. Surface light diffusion layers, which are adjustable according to surface shape, are classified into lenticular light diffusion layers 501a and 501b, a light diffusion layer 501c having a holographic characteristic, and a light diffusion layer having an uneven structure. The respective surface light diffusion layers have a screen structure in which lateral and vertical viewing angles can be adjusted to meet customers' demand by attaching a volume light diffusion layer having light directivity through the adjustment of the arrangement of light diffusible beads arranged in the light diffusion layer.

FIG. 5A is an example of a screen using a lenticular light diffusion layer. The lenticular light diffusion layer 501a is formed in a cylindrical shape extending to the right and left and, therefore, the amount of light emitted from the microlens array 302 is further distributed in the lateral directions thereof through the lenticular light diffusion layer 501a, thus increasing the lateral viewing angle while decreasing the vertical viewing angle.

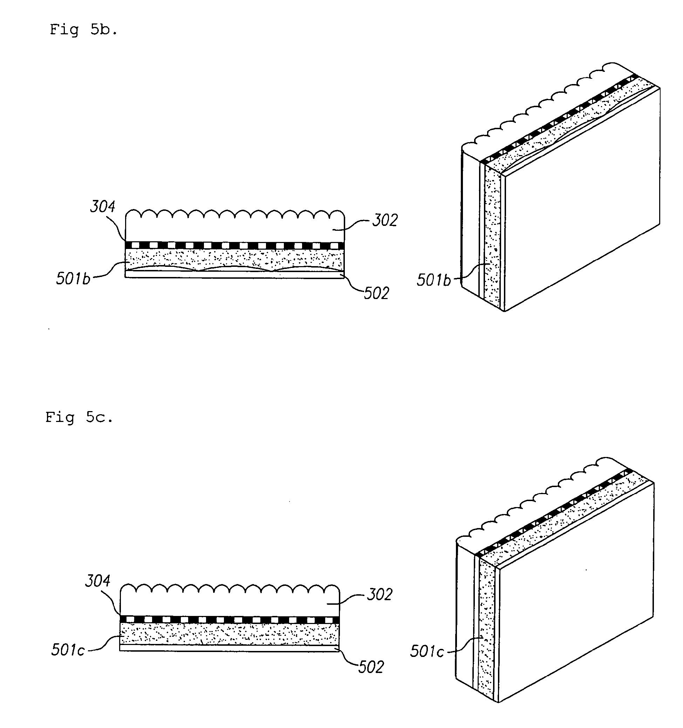

FIG. 5B is an example of a screen using a light diffusion layer having a concave lenticular structure. The example can increase the lateral viewing angle using a lens array having the concave lenticular structure.

FIG. 5C is an example of a screen using a holographic light diffusion layer 501c. In FIG. 5c, the holographic light diffusion layer 501c can adjust the distribution of lateral and vertical light diffusion angles using several-micrometer fine pattern width, depth, and an aspect ratio. The holographic light diffusion layer 501c is characterized in that a structural feature having no period can minimize moire and chromatic aberration without depending on wavelength. The holographic light diffusion layer 501c can use a single surface or both surfaces. The lenticular light diffusion layer 501a or 501b or the holographic light diffusion layer 501c can be used after being attached to a surface on which the microlenses are arranged, or after being attached to the opposite surface. The lenticular light diffusion layer 501a or 501b or the holographic light diffusion layer is generally manufactured and used while being integrated with the other elements, but it may be separately manufactured and used.

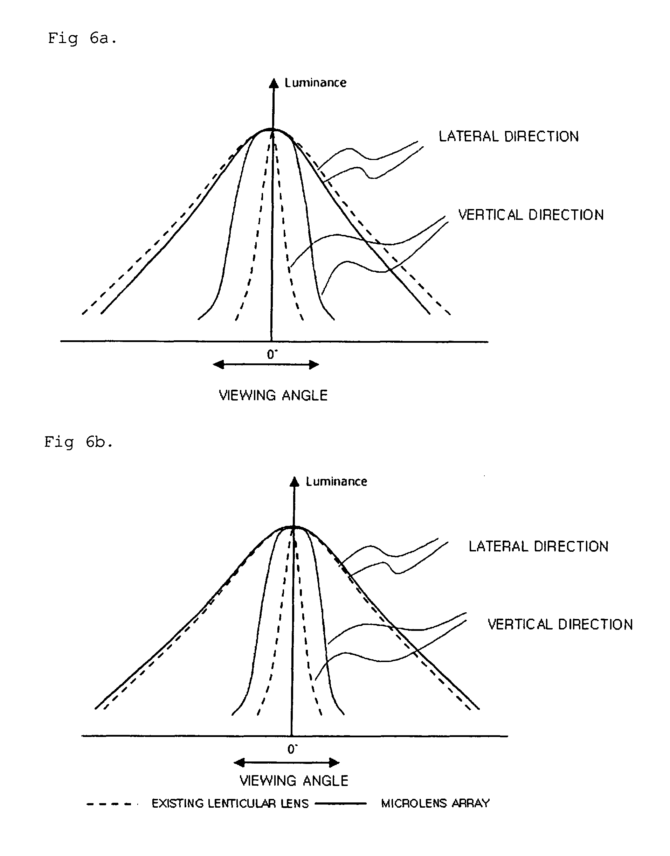

FIGS. 6A, which is a graph that compares the conventional lenticular microlens array and the honeycomb-shaped microlens array according to the embodiment of the present invention from the point of view of viewing angles and brightness, illustrates lateral and vertical brightness depending on viewing angles.

In FIG. 6A, solid lines indicate brightness with respect to the viewing angles of the honeycomb-shaped microlenses, and dotted lines indicate brightness with respect to the viewing angles of conventional lenticular microlenses. As shown in the graph, it can be seen that the honeycomb-shaped microlenses are advantageous in that they structurally refract light even in a vertical direction and, therefore, achieve a sufficient vertical viewing angle, in contrast to the conventional lenticular microlenses. Furthermore, the honeycomb-shaped microlenses are advantageous in that they are applied to semiconductor process technology in addition to the achievement of the sufficient viewing angle, thus enabling fine pitch manufacture and increasing resolution.

Furthermore, since the bottom of the honeycomb-shaped microlenses has a structure in which the bottom is fully occupied by the microlenses so that gaps can be minimized, the distance between the lenses is minimized and, therefore, a fill factor is maximized. Accordingly, the efficiency of the present embodiment can increase, in contrast to that of a conventional structure.

The light diffusion layer, which belongs to the components of the projection screen, basically performs functions of maintaining the brightness of an entire screen by uniformly distributing light, which is projected from a backlight, in a space and constantly, minimizing the loss of penetration, and adjusting speckles and color tone. Accordingly, in the present invention, the light diffusion layer having directivity for light distribution is additionally provided, and allows lateral and vertical viewing angles to be changed according to viewers' preferences. A considerable number of existing products, which function as light diffusion layers, have been commercialized, and viewing angles can be adjusted using an appropriate product.

FIG. 6B illustrates an example of the use of the light diffusion layer having a lenticular lens structure according to the embodiment of the present invention. It can be seen that viewing angles can be adjusted at a level equal to or high than that of the existing lenticular screen by enlarging the lateral viewing angle and decreasing the vertical viewing angle due to the use of the light diffusion layer. This is only an example, and the distribution of viewing angles can be variously adjusted by changing the structure of the light diffusion layer and the microlens array.

As described above, the present invention is advantageous in that viewing angles can be adjusted even in a spherical lens arrangement other than a non-spherical microlens arrangement requiring additional process and design, manufacturing cost can be reduced, and screen products, which have various viewing angle distributions desired by customers, can be easily commercialized.

Although the present invention has been described with reference to the accompanying drawings with emphasis on the preferred embodiments, those skilled in the art will appreciate that various modifications, additions and substitutions are possible, without departing from the scope and spirit of the invention as disclosed in the accompanying claims.

## Claims

1. A projection screen having a microlens array, comprsing:
a substrate formed to mount a plurality of microlenses thereon;
a microlens array formed of microlenses that are arranged and formed on an entire surface of the substrate;
a light blocking layer formed on a rear of the surface on which the microlens array of the substrate is formed;
a light diffusion layer formed on a bottom of the light blocking layer; and
a protection layer formed on a bottom of the light diffusion layer.

2. The projection screen as set forth in claim 1, wherein the microlenses, which constitute the microlens array, are planar convex lenses.

3. The projection screen as set forth in claim 1, wherein the microlenses, which constitute the microlens array, have spherical or non-spherical surfaces.

4. The projection screen as set forth in claim 1, wherein the microlenses, which constitute the microlens array, have different lateral and vertical curvatures.

5. The projection screen as set forth in claim 1, wherein the microlenses, which form the microlens array, are arranged in a honeycomb, rectangular, triangular, or diamond arrangement.

6. The projection screen as set forth in claim 1, wherein gaps between the microlenses, which form the microlens array, are determined such that a fill portion is 95%.

7. The projection screen as set forth in claim 1, wherein a range of light emission angles between the microlenses, which constitute the microlens array, is determined such that, with respect to a line normal to a lens surface, a lateral light emission angle is greater than 30 degrees along a transverse axis.

8. The projection screen as set forth in claim 1, wherein a range of light emission angles between the microlenses, which form the microlens array, is determined such that, with respect to a line normal to a lens surface, a vertical light emission angle is greater than 10 degrees along a longitudinal axis.

9. The projection screen as set forth in claim 1, wherein a pitch between neighboring microlenses in the microlens array is less than 150 µm.

10. The projection screen as set forth in claim 1, wherein the substrate is made of a polymer material.

11. The projection screen as set forth in claim 10, wherein the polymer material is polyethylene terephthalate.

12. The projection screen as set forth in claim 1, wherein the light blocking layer comprises a light apertures for passing light therethrough and a black matrix for blocking the light.

13. The projection screen as set forth in claim 12, wherein the black matrix occupies an area of above 50% of an entire area of the light blocking layer.

14. The projection screen as set forth in claim 1, wherein the light diffusion layer comprises irregularities in a holographic form, on at least one surface thereof.

15. The projection screen as set forth in claim 1, wherein the light diffusion layer comprises a lenticular lens array formed on at least one surface thereof, the lenticular lens array being regularly or irregularly arranged.

16. The projection screen as set forth in claim 1, wherein the light diffusion layer comprises irregularities whose protrusions and recesses are alternately formed on at least one surface thereof, the irregularities being regularly or irregularly arranged.

17. The projection screen as set forth in claim 1, wherein the light diffusion layer comprises light diffusible beads therein, the light diffusible beads being arranged in a predetermined direction or randomly.
